(19) Europäisches Patentamt
European Patent Office
Office européen des brevets

(11) **EP 3 330 893 A1**

(12) **EUROPEAN PATENT APPLICATION**

(43) Date of publication:
06.06.2018 Bulletin 2018/23

(51) Int Cl.:
*G06K 9/00* (2006.01) *G06K 9/46* (2006.01)

(21) Application number: 17204258.2

(22) Date of filing: 29.11.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 30.11.2016 JP 2016232712
14.09.2017 JP 2017176867

(71) Applicant: Ricoh Company Ltd.
Ohta-ku
Tokyo 143-8555 (JP)

(72) Inventors:
• YAMADA, Yuu
Tokyo, 143-8555 (JP)
• YOSHIDA, Jun
Tokyo, 143-8555 (JP)
• OHBAYASHI, Yohichiroh
Tokyo, 143-8555 (JP)
• KUBOZONO, Hiroki
Tokyo, 143-8555 (JP)
• OKADA, Daisuke
Tokyo, 143-8555 (JP)
• KIDA, Shintaroh
Tokyo, 143-8555 (JP)
• KIMURA, Sukehiro
Tokyo, 143-8555 (JP)
• SUZUKI, Tabito
Tokyo, 143-8555 (JP)

(74) Representative: Schwabe - Sandmair - Marx
Patentanwälte Rechtsanwalt
Partnerschaft mbB
Joseph-Wild-Straße 20
81829 München (DE)

(54) **INFORMATION PROCESSING DEVICE, INFORMATION PROCESSING METHOD, AND CARRIER MEANS**

(57) An information processing device (30), a method of processing information, and a carrier means carrying computer readable code for controlling a computer to carry out the method. The information processing device (30) and the method includes generating two-dimensional distribution data indicating a position of an object in a horizontal direction and a position of the object in a depth direction, based on data in which the position of the object in a vertical direction, the position of the object in the horizontal direction, and the position of the object in the depth direction are associated with each other, detecting length of a plurality of columns of the object in the depth direction, and separating the object in the depth direction at at least one of the plurality of columns whose length is equal to or greater than a prescribed threshold.

FIG. 1

LEFT FIELD OF VISION
RIGHT FIELD OF VISION
1
2
DIRECTION OF TRAVEL OF VEHICLE

## Description

### BACKGROUND

Technical Field

Embodiments of the present disclosure relate to an information processing device, an information processing method, and carrier means.

Background Art

Currently, the body structure or the like of cars have been developed with a view to improving the security of cars, for example, by protecting pedestrians or passengers when there is a collision with the passengers or other cars. In recent years, technologies to detect, for example, a person or a car at high speed have been developed due to the development of information processing technologies and image processing technologies. With the application of such technologies, cars with a collision avoidance system (CAS) that prevent a collision by automatically applying brakes beforehand are also known. Such a collision avoidance system measures the distance to an object to be detected such as a person or another car, using, for example, a millimeter-wave radar device, a light detection and ranging (LiDAR) device, or a stereo camera, and controls the braking of the vehicle based on the result of measurement of distance. Due to the configuration as described above, automatic braking can be achieved according to the distance to an object such as a person or another car.

JP-H06-226828-A relates to a vehicle-mounted outside monitoring apparatus that detects a three-dimensional object such as a guardrail, plants, and in-line pylons, which exists in line and serves as the boundary of the road, as a side wall. This vehicle-mounted outside monitoring apparatus uses a stereo optical system to capture an object outside the vehicle within range of the installed position. The stereo image processing apparatus calculates the distance distribution over the entirety of an image captured by the stereo optical system. The road-and-side wall detector calculates the three-dimensional positions of each part of an object in the calculated distance distribution. Then, the road-and-side wall detector obtains information about the shape of the road and the side wall, using the data of the calculated three-dimensional positions.

In the arrangement described above, the detection processes of an object such as a person and a vehicle is achieved by measuring the distance to an object such as a person or another car. For this reason, it is desired that objects be detected upon being separated with a high degree of precision.

However, an attempt to detect an object at high speed may lead to rough analysis in the object detection processes. For this reason, in the known object detection technologies including the technologies disclosed in JP-H06-226828-A, for example, when a vehicle is close to the wall, the wall and the vehicle tend to be erroneously detected as the same physical object. Moreover, when a large number of preceding vehicles appears to be traveling in a combined manner in the direction of the length or stopped, the vehicles in line tend to be erroneously detected as a wall. By carefully performing the analysis, the precision of the object recognition may be improved. However, such careful analysis lengthens the time for analysis, and such lengthened analysis may impair the speed-enhancement of the object detection processes. There is such a trade-off between the time required for detection processes and the precision of the detection.

### SUMMARY

Embodiments of the present disclosure described herein provide an information processing device, a method of processing information, and a carrier means carrying computer readable code for controlling a computer to carry out the method. The information processing device and the method includes generating two-dimensional distribution data indicating a position of an object in a horizontal direction and a position of the object in a depth direction, based on data in which the position of the object in a vertical direction, the position of the object in the horizontal direction, and the position of the object in the depth direction are associated with each other, detecting length of a plurality of columns of the object in the depth direction, and separating the object in the depth direction at at least one of the plurality of columns whose length is equal to or greater than a prescribed threshold.

According to one aspect of the present disclosure, objects can be detected at high speed with a high degree of precision.

### BRIEF DESCRIPTION OF THE DRAWINGS

A more complete appreciation of exemplary embodiments and the many attendant advantages thereof will be readily obtained as the same becomes better understood by reference to the following detailed description when considered in connection with the accompanying drawings.

FIG. 1 is a diagram illustrating the position of a stereo camera mounted on a vehicle, which is a part of an equipment control system, according to an embodiment of the present disclosure.

FIG. 2 is a diagram illustrating a configuration of a stereo camera and its peripheral equipment provided for a vehicle, according to an embodiment of the present disclosure.

FIG. 3 is a diagram illustrating a configuration of an imaging device provided with a stereo camera, according to an embodiment of the present disclosure.

FIG. 4 is a functional block diagrams of the functions of an equipment control system according to an embodiment of the present disclosure.

FIG. 5A and FIG. 5B are diagrams illustrating the separating processes of objects in the column direction, according to an embodiment of the present disclosure.

FIG. 6 is a flowchart of the separating processes of objects in the column direction, in an equipment control system according to the first embodiment.

FIG. 7A, FIG. 7B, and FIG. 7C are schematic diagrams illustrating the separating processes of objects in the column direction, in an equipment control system according to the first embodiment.

FIG. 8 is a flowchart of the separating processes of objects in the column direction, in an equipment control system according to a second embodiment.

FIG. 9A, FIG. 9B, and FIG. 9C are schematic diagrams illustrating the separating processes of objects in the column direction, in an equipment control system according to the second embodiment.

FIG. 10A and FIG. 10B are schematic diagrams illustrating the separating processes of objects in the row direction, in an equipment control system according to a third embodiment.

FIG. 11A, FIG. 11B, FIG. 11C, and FIG. 11D are schematic diagrams illustrating the separating processes of objects in the row direction, in an equipment control system according to the third embodiment.

FIG. 12A and FIG. 12B are flowcharts of the separating processes of objects in the row direction, in an equipment control system according to the third embodiment.

FIG. 13A and FIG. 13B are schematic diagrams illustrating the separating processes of objects in the row direction, in an equipment control system according to a fourth embodiment.

FIG. 14 is a flowchart of the separating processes of objects in the row direction, in an equipment control system according to the fourth embodiment.

FIG. 15 is a diagram illustrating the separating processes of objects in the row direction, in an equipment control system according to the fourth embodiment.

FIG. 16A, FIG. 16B, FIG. 16C, FIG. 16D, and FIG. 16E are schematic diagrams illustrating the separating processes of objects in the row direction, in an equipment control system according to the fourth embodiment.

FIG. 17 is a diagram illustrating objects separated in the row direction, in the equipment control system according to a fourth embodiment.

FIG. 18A and FIG. 18B are flowcharts of the separating processes of objects in the row direction, in an equipment control system according to a fifth embodiment.

FIG. 19A and FIG. 19B are flowcharts of the separating processes of objects in the row direction, in an equipment control system according to a sixth embodiment.

FIG. 20 is a functional block diagrams of the functions of an equipment control system according to a seventh embodiment of the present disclosure.

The accompanying drawings are intended to depict exemplary embodiments of the present disclosure and should not be interpreted to limit the scope thereof. The accompanying drawings are not to be considered as drawn to scale unless explicitly noted.

DETAILED DESCRIPTION

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing example embodiments shown in the drawings, specific terminology is employed for the sake of clarity. However, the present disclosure is not intended to be limited to the specific terminology so selected and it is to be understood that each specific element includes all technical equivalents that have the same structure, operate in a similar manner, and achieve a similar result.

Some embodiments of an equipment control system will be described below with reference to the drawings.

<First Embodiment>

<System Configuration>

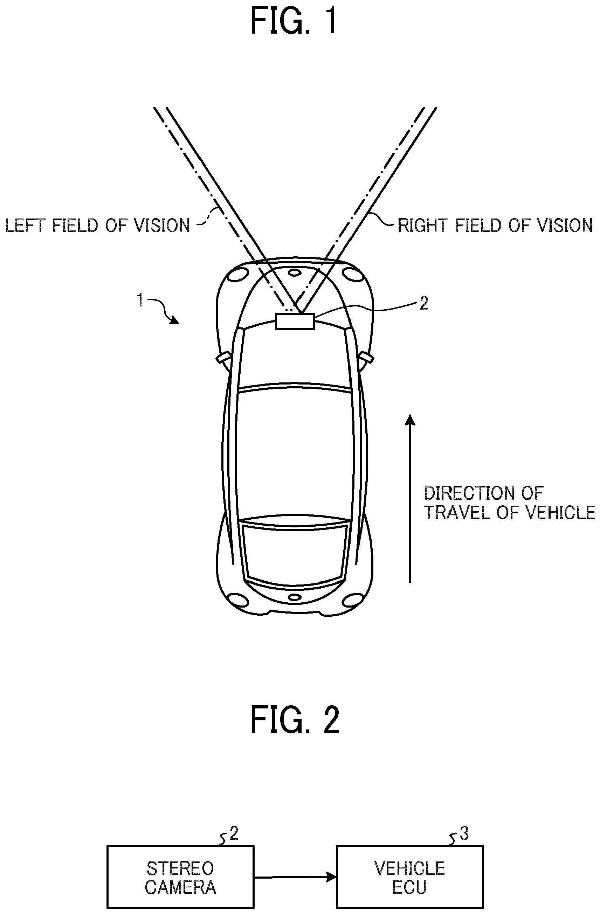

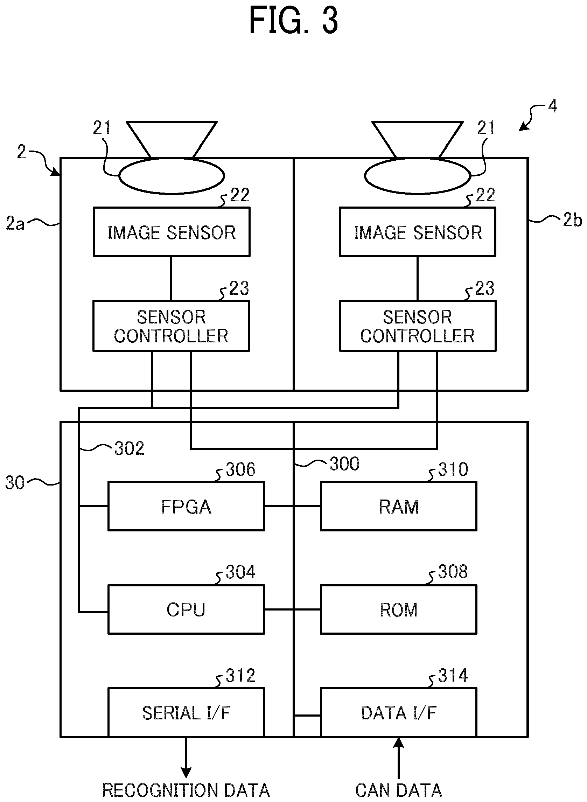

The equipment control system according to the first embodiment is mounted, for example, on the front windshield of a vehicle 1, as illustrated in FIG. 1, and is provided with a stereo camera 2 that captures an image of a predetermined area ahead of the vehicle 1 in the directions of travel. As will be described later with reference to FIG. 3, the stereo camera 2 is an imager provided with two image sensors 22, and captures two images of a right field of vision and a left field of vision.

FIG. 2 is a diagram illustrating a configuration of the stereo camera 2 and its peripheral provided for the vehicle 1 that is an example of a mobile object, according to the present embodiment. For example, the stereo camera 2 sends the captured two images to a vehicle engine control unit (ECU) 3. The vehicle ECU 3 is provided for the vehicle 1, and performs various kinds of control on the vehicle 1 such as engine-control, brake control, lane keep assist, and steering assist on the vehicle 1. The case of a vehicle is described as an example of a mobile object in the following description. However, the equipment control system according to the present embodiment may be applied, for example, to a ship, aircraft, and a robot.

FIG. 3 is a diagram illustrating a configuration of an imaging device 4 provided with the stereo camera 2, according to the present embodiment. The imaging device 4 includes, for example, the stereo camera 2 and an image processing device 30. The stereo camera 2 includes a camera unit 2a for a left eye and a camera unit 2b for a right eye, and these two camera units are assembled horizontally in parallel and capture moving images (or still images) in an area to be captured.

Each of the camera unit 2a and the camera unit 2b includes a lens 21, an image sensor 22, and a sensor controller 23. The image sensor 22 is, for example, a charge coupled device (CCD) image sensor or a complementary metal oxide semiconductor (CMOS) image sensor. The sensor controller 23 controls, for example, the exposure of the image sensor 22, the reading of an image, the communication with an external circuit, and the sending of the image data.

For example, the image processing device 30 may be installed inside the vehicle ECU 3 illustrated in FIG. 2. The image processing device 30 includes, for example, a data bus line 300, a serial bus line 302, a central processing unit (CPU) 304, a field programmable gate array (FPGA) 306, a read-only memory (ROM) 308, a random access memory (RAM) 310, a serial interface (I/F) 312, and a data interface (I/F) 314.

The stereo camera 2 as described above is connected to the image processing device 30 through the data bus line 300 and the serial bus line 302. The CPU 304 controls the entire operation of the image processing device 30, and performs image processing and image recognition processes. The brightness image data of the images that are captured by the image sensors 22 of the camera unit 2a and the camera unit 2b are written into the RAM 310 of the image processing device 30 through the data bus line 300. The control data for changing the exposure value of a sensor from the CPU 304 or the FPGA 306, the control data for changing the image reading parameter, various kinds of setting data, or the like are transmitted and received through the serial bus line 302.

The FPGA 306 performs processing that needs to be done in real time on the image data stored in the RAM 310, such as gamma correction, distortion correction (collimation of images on the right and left), disparity computation using block matching, to generate a disparity image, and writes the generated disparity image into the RAM 310 again. The CPU 304 controls each one of the sensor controllers 23 of the stereo camera 2, and controls the entirety of the image processing device 30. The CPU 304 obtains the controller area network (CAN) data of the vehicle through the data interface 314 as parameters (e.g., vehicle speed, acceleration, a rudder angle, and a yaw rate). Note that the term "image" as in "disparity image" may simply refer to a set of information, and is not limited to an image to be displayed on a display or the like.

The vehicle ECU 3 is supplied with the detection data (recognition data) of an object to be detected (object to be recognized) through the serial interface 312, and used, for example, by an automatic braking system and a drive assistance system provided as a control function of the vehicle ECU 3. The automatic braking system controls the braking of the vehicle 1. The drive assistance system performs various kinds of control on the vehicle 1 such as a lane keep assist and steering assist.

<Function of Image Processing Device>

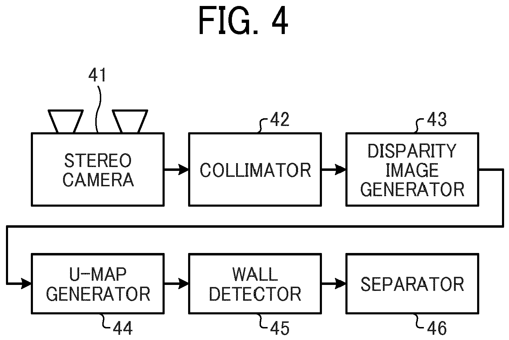

As illustrated in FIG. 4, the image processing device 30 is provided with multiple functions including a collimator 42, a disparity image generator 43, a U-map generator 44 (i.e., an example of a generator), a wall detector 45, and a separator 46 (i.e., an example of a separator). For example, the collimator 42 and disparity image generator 43 is implemented by hardware such as the programmable logical block of the FPGA 306. In the present embodiment, the collimator 42 and disparity image generator 43 are implemented by hardware. However, the collimator 42 and disparity image generator 43 may be implemented by software such as a three-dimensional object recognition program as will be described later.

The CPU 304 executes a three-dimensional object recognition program stored in a storage unit such as the ROM 308 or the RAM 310 to implement the multiple functions illustrated in FIG. 4, including the U-map generator 44, the wall detector 45, and the separator 46.

In the present embodiment, the U-map generator 44, the wall detector 45, and the separator 46 are implemented by software. However, some of or all of the U-map generator 44, the wall detector 45, and the separator 46 may be implemented by hardware such as an integrated circuit (IC).

Alternatively, the three-dimensional object recognition program may be installed for distribution in any desired computer-readable recording medium such as a compact disc, a read-only memory (CD-ROM), a flexible disk (FD), in a file format installable or executable by a computer. Moreover, the three-dimensional object recognition program may be installed for distribution in any desired computer-readable recording medium such as a compact disc-recordable (CD-R), a digital versatile disk (DVD), a Blu-ray disc (registered trademark), and a semiconductor memory. Alternatively, the three-dimensional obj ect recognition program may be provided and installed through a network such as the Internet. Alternatively, the three-dimensional object recognition program may be integrated in advance, for example, into the ROM inside the device for distribution.

<Operations performed by Image Processing Device>

The stereo camera 41 supplies the collimator 42 of the FPGA 306 with the brightness image data generated by each of the camera units 2a and 2b that perform color brightness conversion. The collimator 42 collimates the brightness image data supplied by the stereo camera 41 to generate a collimated brightness image where the distortion due to the optical system of each of the camera units 2a and 2b is corrected.

The disparity image generator 43 generates a disparity image having a disparity value on a pixel-by-pixel basis, which is an example of distance image having distance data on a pixel-by-pixel basis. In other words, the disparity image is an example of data in which the position of an object in the up-and-down directions, the position of the object in the right and left directions, and the position of the object in the depth directions are associated with each other. The U-map generator 44 generates a U-map that is a two-dimensional histogram, where the horizontal axis and the vertical axis indicate the actual distance and the disparity value, respectively, and the Z-axis indicates the frequency, based on the disparity image generated by the disparity image generator 43. More specifically, a U-map is a map of bird's-eye view (image of bird's-eye view) generated based on the disparity image, and is two-dimensional distribution data in which the position of an object in the horizontal direction and the position of the object in the depth direction are associated with each other. For purposes of simplification of explanation, the term "map" is used in the present disclosure. However, a map is not literally generated. In actuality, map-like data is generated and stored in a storage unit such as the ROM 308 or the RAM 310, as two-dimensional distribution data.

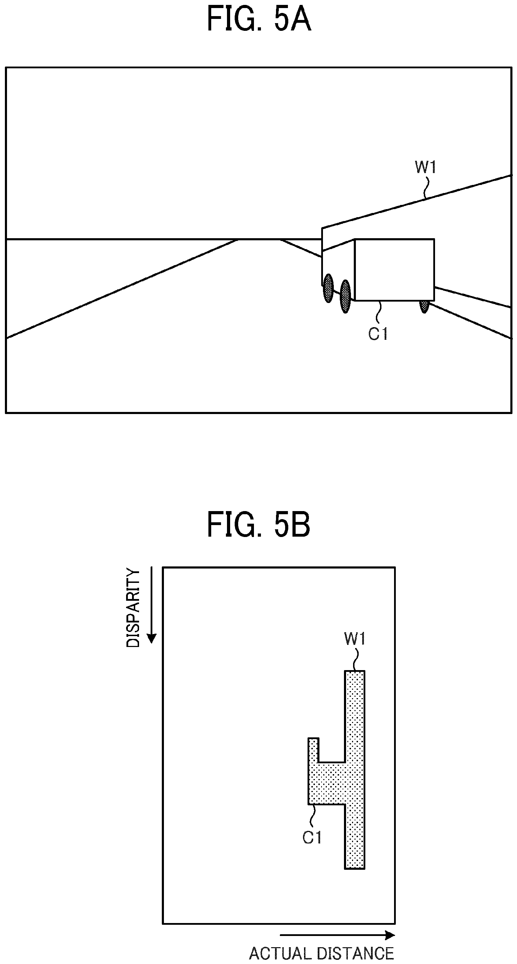

The disparity image generator 43 may determine whether or not to vote upon calculating the height based on the value of (d) of a point (x, y, d) on the disparity image where the height H from the road surface is within a predetermined range (for example, 20 centimeters (cm) to 3 meters (m)). The position of the road surface and the height from the road surface can be calculated by any known method using a disparity image. The position of voting in the horizontal direction is computed using the value of (x, d) of the points (x, y, d) of the disparity image. The distance between the center of the disparity image and the pixel at "x" is converted into the actual distance to determine the position of voting in the horizontal direction. For example, a wall W1, as illustrated in FIG. 5A, is built along the right edge of the road, and it is assumed that a disparity image is given based on a captured image where a car C1 is traveling forward along the wall W1. In such a case, the U-map generator 44 generates a U-map on which the wall W1 that is shaped like a straight bar that extends from the front towards the depth direction and the rear of the car C1 that is shaped like a rectangular and in contact with the wall W1, as illustrated in FIG. 5B, are voted.

The wall detector 45 detects, for example, the wall W1 that is voted on the U-map illustrated in FIG. 5B. However, in the example as illustrated in FIG. 5B, the wall W1 and the car C1 are voted in contact with each other. For this reason, the wall W1 and the car C1 may be detected by error as one lump of wall. In order to avoid such s situation, the separator 46 performs separating processes in the column direction to separate the object that is detected as one lump of wall by the wall detector 45 into the wall W1 and the car C1.

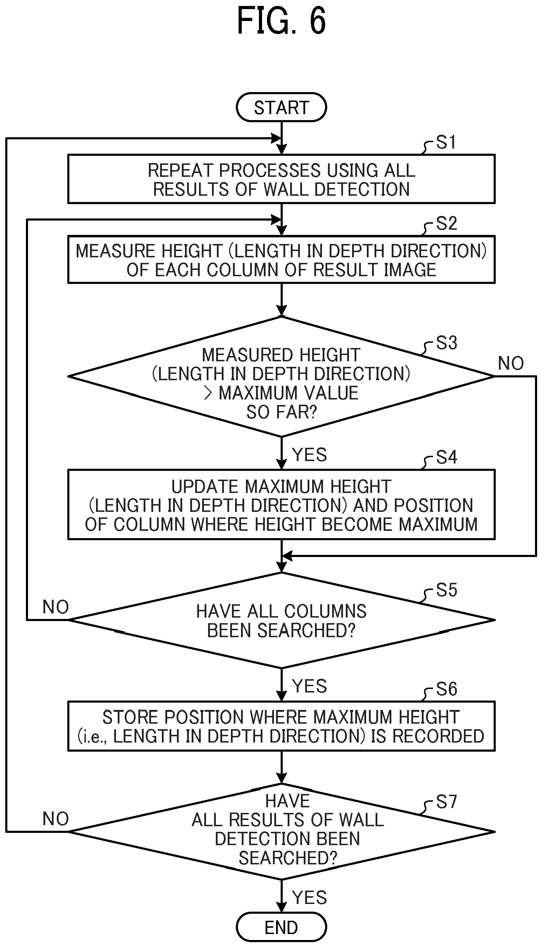

FIG. 6 is a flowchart of the processes of separating an object that is detected as one lump of wall (results of wall detection) into the wall W1 and the car C1, according to the present embodiment. The separator 46 starts the processes via a step S1, and repeats the processes in the steps S2 to S7 until all the results of wall detection have been searched and processed.

Step S2:

The height (i.e., the length in the depth direction) of each of the columns of the image (object) of the results of wall detection is detected.

Step S3:

Whether the height (i.e., the length in the depth direction) of column detected in the step S2 is the greatest height (length in the depth direction) is determined among the already-detected heights (i.e., the length in the depth direction) of the columns of the object whose heights (i.e., the length in the depth direction) are currently detected. When it is determined to be "NO" in the step S3, the process proceeds to a step S5.

Step S4:

When it is determined that the detected height (i.e., the length in the depth direction) of column is the greatest ("YES" in the step S3), the value of the maximum height (i.e., the length in the depth direction) of the columns of the object whose heights are currently detected and the position information of the column having the value of the maximum height (i.e., the length in the depth direction) are updated.

Step S5:

Whether, for example, the heights (i.e., the length in the depth direction) of all the columns of the object whose heights are currently detected have been searched is determined. When all the columns of the object whose heights are currently detected have not yet been searched ("NO" in the step S5), the process returns to the step S2, and the not-yet searched columns of the object whose heights are currently detected are searched.

Step S6:

When all the columns of the object whose heights are currently detected have been searched, the position information of the column where the height (i.e., the length in the depth direction) becomes maximum in the object whose heights are currently detected is stored in a storage unit such as the ROM 308 or the RAM 310, as wall position information that indicates the position of a wall.

Step S7:

When all the objects have been searched, the processes in the flowchart of FIG. 6 are terminated ("YES" in the step S7). When all the objects have not yet been searched, ("NO" in the step S7), the process returns to the step S1, and the above processes are repeated on the other objects.

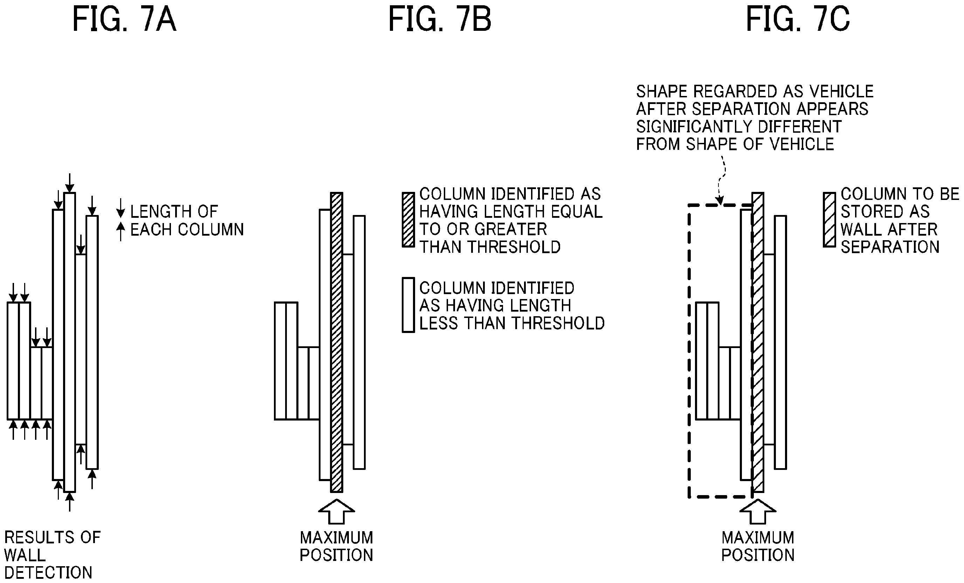

FIG. 7A, FIG. 7B, and FIG. 7C are schematic diagrams illustrating the separating processes of such objects in the column direction, according to the present embodiment. As illustrated in FIG. 7A, the separator 46 firstly detects the heights (i.e., the length in the depth direction) of a plurality of columns of an object (steps S2 to S5). Next, the separator 46 stores in a storage unit the position information of the column having the greatest length among a plurality of columns that constitutes an object, as wall position information (see FIG. 7B).

The separator 46 separates a lump of object at the boundary column indicated by the wall position information to separate the wall W1 and the car C1 from each other. Due to the configuration as described above, even with a U-map with low resolution, the objects can precisely be separated from each other with relatively simple separating processes where objects are separated from each other at the boundary, i.e., the column with the maximum length among a plurality of columns that constitutes an object. Moreover, as objects can be separated from each other with relatively simple computations, the objects can be separated from each other at high speed. In other words, the objects can be separated from each other at high speed with relatively simple information processing computation.

<Second Embodiment>

Next, the equipment control system according to a second embodiment is described. As in the first embodiment as described above, when an object is separated at the column with the greatest length that serves as a boundary, like a separated and localized object on the left side of FIG. 7C, there is some concern that an unidentifiable object remains. More specifically, in the example case illustrated in FIG. 7C, the separated and localized object on the left side is in a shape unrecognizable as a vehicle.

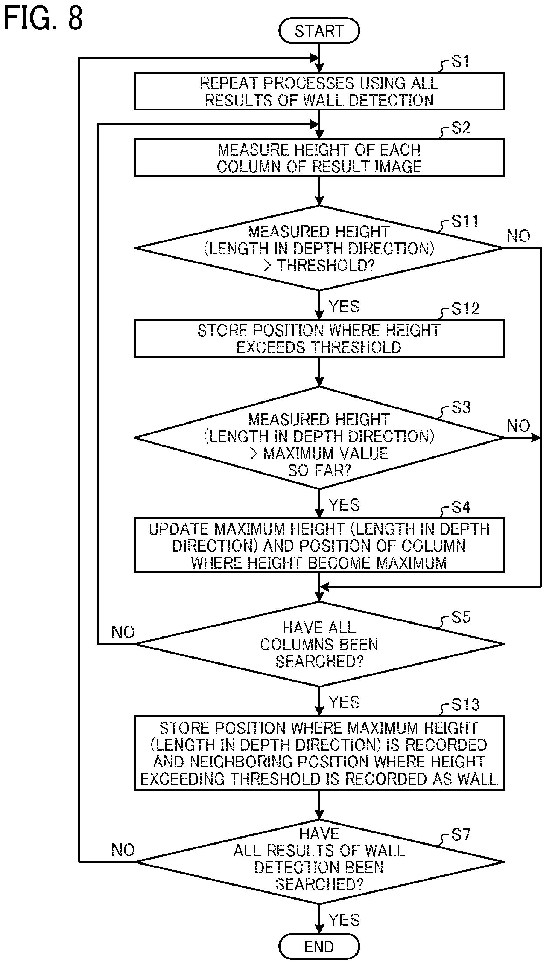

In the equipment control system according to the second embodiment, in order to prevent such an inconvenience, the separator 46 performs operations according to the processes in the flowchart of FIG. 8. Accordingly, objects can be separated from each other even more precisely. The processes in the steps S1 to S5 and the step S7 in the flowchart of FIG. 8 are equivalent to the processes in the steps S1 to S5 and the step S7 in the flowchart of FIG. 6 as described above, respectively. In other words, the differences between the flowchart of FIG. 6 and the flowchart of FIG. 8 are in that there are steps S11 and S12 added between the step S2 and the step S3, and that there is a step S13 added between the step S5 and the step S7. Note that the second embodiment as will be described later is different from the first embodiment as described above only in this respect. For this reason, only the differences between the second embodiment and the first embodiment will be described below, and overlapping descriptions are omitted where appropriate.

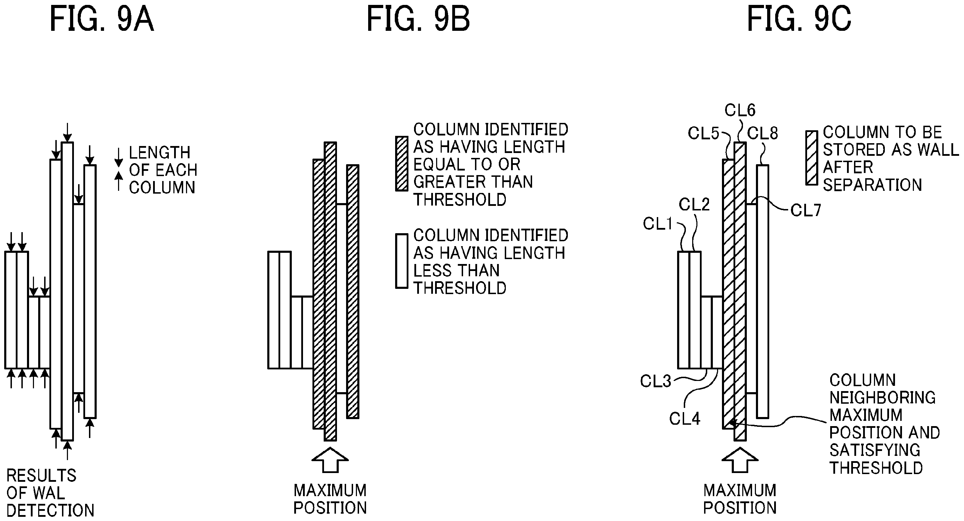

In the second embodiment, the separator 46 in the step S2, advances the process to the step S11 when the heights (i.e., the length in the depth direction) of a plurality of columns are detected in the results of wall detection (object) as illustrated in FIG. 9A, and determines whether the height (length in the depth direction) of the currently-searched column is equal to or greater than a threshold. For example, such a threshold may be set to a value that slightly exceeds the length of a common car such as "10 m."

Once a column with the height (i.e., the length in the depth direction) equal to or greater than the threshold is detected ("YES" in the step S11), the separator 46 advances the process to the step S12, and stores the position information of the column with the height (i.e., the length in the depth direction) equal to or greater than the threshold in a storage unit such as the RAM 310, as wall position information. In the example case illustrated in FIG. 9B, the columns with shade of oblique lines indicates the columns with the height (i.e., the length in the depth direction) equal to or greater than the threshold. The separator 46 stores the position information of the columns with shade of oblique lines in a storage unit.

Once the detection of columns with the height (i.e., the length in the depth direction) equal to or greater than the threshold, from among a plurality of columns that constitutes an object, is completed as above, the separator 46 in the step S3 and the step S4, the column with the maximum height (i.e., the length in the depth direction) is detected from among the columns with the height (i.e., the length in the depth direction) equal to or greater than the threshold. Then, in a step S13, the separator 46 stores the position of the column with the maximum height (i.e., the length in the depth direction) and each of the positions of the columns that are adjacent to the column with the maximum height (i.e., the length in the depth direction) and have the height (i.e., the length in the depth direction) equal to or greater than the above threshold in a storage unit, as wall position information.

In the case of FIG. 9C, the column CL 6 is the column with the maximum height (i.e., the length in the depth direction). Next, among the columns adjacent to the maximum column CL6, the column CL5 is the only column that has the height (i.e., the length in the depth direction) equal to or greater than the threshold. By contrast, the height of the column CL7 is less than the threshold. In this case, the separator 46 stores the positions of the column CL5 and the column CL6 in a storage unit, as wall position information. Due to the configuration as described above, when objects are separated at the column CL5 and the column CL6 that serve as a boundary, as illustrated in the columns CL1 to CL4 of FIG. 9C, an object that is identifiable as a vehicle can be left. Accordingly, objects can be separated from each other even more precisely, and advantageous effects similar to those of the first embodiment as described above can be achieved.

<Third Embodiment>

Next, the equipment control system according to a third embodiment is described. In the first and second embodiments as described above, objects are separated from each other in the row direction. By contrast, in the equipment control system according to the third embodiment, objects are separated from each other in the column direction. Note that the third embodiment as will be described later is different from the above embodiments as described above only in this respect. For this reason, only the differences between the third embodiment and the above embodiments will be described below, and overlapping descriptions are omitted where appropriate.

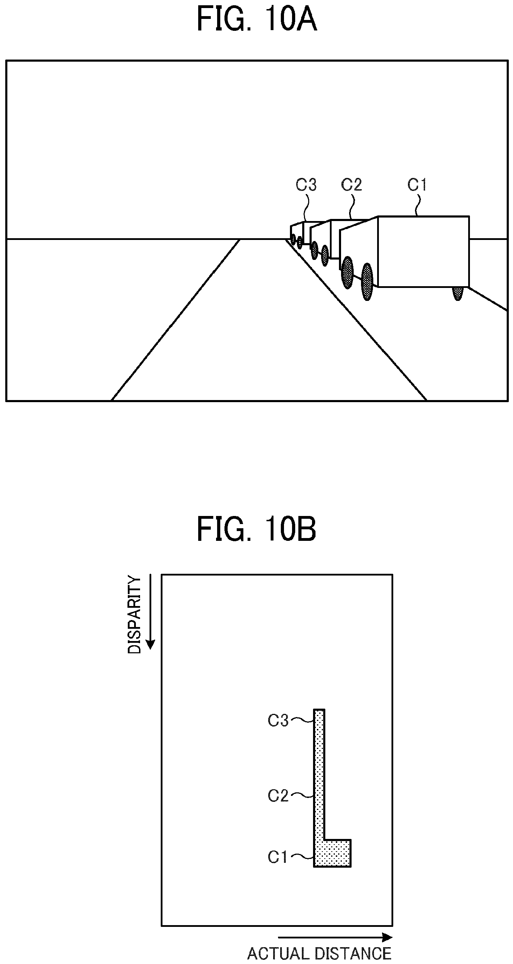

For example, as illustrated in FIG. 10A, when cars C1 to C3 that appear as if they are connected to each other are travelling forward in the left lane, as illustrated in FIG. 10B, an object like a stick (straight line) is displayed on the U-map, which corresponds to the sides of the multiple cars C1 to C3 that appear to be connected to each other. Moreover, a rectangular object that corresponds to the rear of the car C1 at the tail end is displayed in a way that such a rectangular object is connected to a portion of the stick-like object on the near right side. In other words when cars C1 to C3 that appear as if they are connected to each other are travelling forward in the left lane, as illustrated in FIG. 10B, an "L-shaped" object is displayed on the U-map.

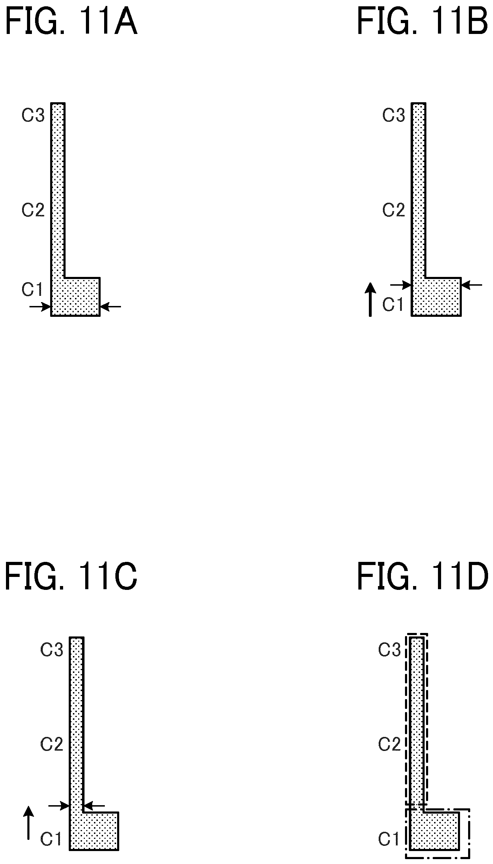

When such a U-map is obtained, the separator 46 of the equipment control system according to the third embodiment separates the object in the row direction at the boundary row where a difference in the width of row of the object in the results of wall detection is equal to or greater than a predetermined threshold. More specifically, the separator 46 as illustrated in FIG. 11A to FIG. 11C, the widths of a plurality of rows that constitutes the object are sequentially detected from the front side of the object. Every time the width of each row is detected, the separator 46 compares the detected width with the first threshold. For example, the first threshold may be set to "1.5 m" which is a value slightly smaller than the width of the rear of one vehicle. Every time the width of each row is detected, the separator 46 counts the number of rows whose widths are equal to or greater than the first threshold. When the counted number becomes as large as a number that indicates one vehicle, the separator 46 separates the object at the boundary row whose width is lastly detected to be equal to or greater than the first threshold.

Accordingly, as illustrated in FIG. 11D, "the car C1 on the near side" can be separated from "the car C2 and the car C3 preceding the car C1."

A vehicle for which the equipment control system according to the present embodiment is provided tends to be controlled in view of the running state of the car C1 on the near side. For this reason, the separator 46 eliminates from the results of wall detection the objects that correspond to the car C2 and the car C3 other than the car C1 on the near side, and does not use the objects that correspond to the car C2 and the car C3 to control the vehicle. Alternatively, the objects that correspond to the car C2 and the car C3 may be used as the results of wall detection.

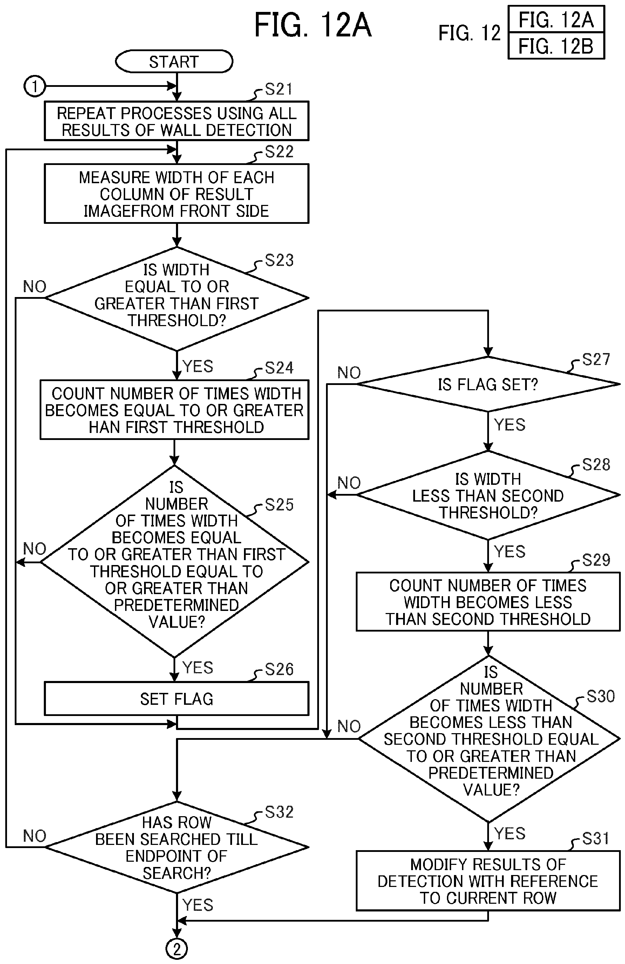

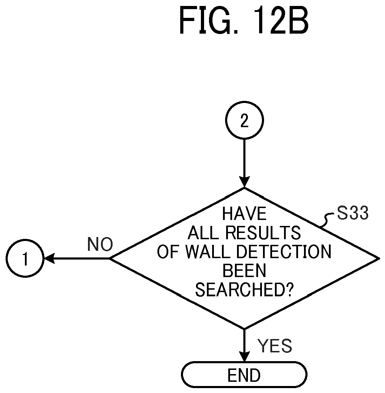

FIG. 12A and FIG. 12B are a flowchart of how the separator 46 according to the third embodiment as above separates objects in the row direction. The separator 46 starts the processes via a step S21, and repeats the processes in steps S22 to S33 for each object until it is determined in the step S33 that the separating processes in the row direction are completed for all the results of wall detection (objects).

In the step S22, as described above with reference to FIG. 11A to FIG. 11C, the separator 46 detects the width of each row. In a step S23, the separator 46 determines whether or not the detected width is equal to or greater than a first threshold that is set to be slightly smaller than the width of the rear of one vehicle. In a step S24, the number of rows whose widths are equal to or greater than the first threshold is counted. In a step S25, the separator 46 determines whether the number of rows whose widths are equal to or greater than the first threshold is equal to or greater than a predetermined value that corresponds to, for example, the width of the rear of one vehicle. In a step S26, as the number of rows whose widths are equal to or greater than the first threshold has become equal to or greater than the predetermined value, the separator 46 stores in the above storage unit the data indicating that the object is considered to be a vehicle (sets a flag).

In a step S27, the separator 46 determines whether or not a flag is set. When no flag is set ("NO" in the step S27), the separator 46 in a step S32, determines whether or not all the rows of the object, which is currently worked on, have been searched. When it is determined that all the rows of the object have been searched, the separator 46 advances the process to a step S33, and determines whether the separating processes in the row direction are completed for all the objects (results of wall detection). When it is determined that the separating processes in the row direction are completed for all the objects (results of wall detection) ("YES" in the step S33), the separator 46 terminates the processes in the flowchart of FIG. 12A and FIG. 12B. When it is determined that the separating processes in the row direction are not yet completed for all the objects (results of wall detection) ("NO" in the step S33), the separator 46 returns the process to the step S22 via the step S21, and starts detecting the widths of rows of the next object.

As the flag is set, in a step S28, the separator 46 determines whether or not the width of row is less than a second threshold. For example, the second threshold is set to a value of width further smaller than the first threshold that is set to be slightly smaller than the width of the rear of one vehicle, and is set to be equal to or wider than the width of an object formed according to, for example, the car C2 and the car C3 traveling forward at positions ahead of the nearest car C1. In a step S29, the separator 46 counts the number of rows whose widths are less than the second threshold. Then, in a step S30, when the counted value is equal to or greater than a count value that is counted when a plurality of in-line vehicles whose number is equal to or greater than a predetermined value appear as if these vehicles are connected to each other ("YES" in the step S30), the position information of an object stored in a storage unit is modified such that the object will be separated at the current row (step S31).

After the above separation, the separator 46 excludes from the storage unit the wall position information of the objects that correspond to the car C2 and the car C3. Accordingly, driver assistance such as the brake control on the vehicle 1 and traveling-position control is performed based on the movement of the car C1. However, as the car C2 and the car C3 are at positions further than the car C1 in the depth direction, the driver assistance is not very much affected.

In the equipment control system according to the third embodiment, as illustrated in FIG. 11D, "the nearest car C1" can be separated from "the car C2 and the car C3 traveling forward at positions ahead of the car C1" in the row direction. Accordingly, object recognition processes can precisely be performed based on the separated objects. Moreover, the accuracy of control improves in the equipment control system, and advantageous effects similar to those of the embodiments as described above can be achieved.

<Fourth Embodiment>

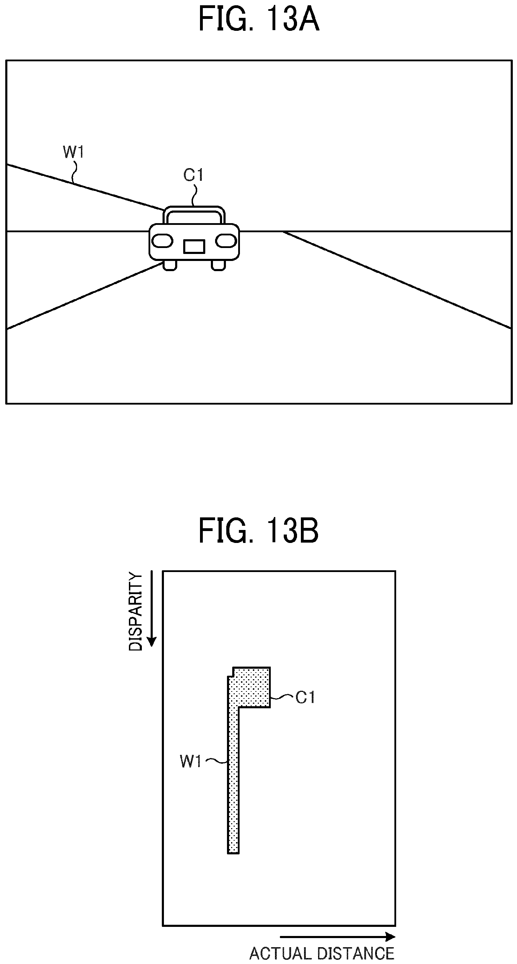

Next, the equipment control system according to a fourth embodiment is described. As illustrated in FIG. 13A, when a wall W1 is built along the left edge of the road and a car C1 is traveling forward at a position on the far side of the road, a U-map is obtained on which an object as illustrated in FIG. 13B appears. More specifically, as illustrated in FIG. 13B, a stick-like object that corresponds to the wall W1 and a rectangular object that corresponds to the rear of the car C1 are connected to each other as one object on the far side and appear on the U-map. In the equipment control system according to the fourth embodiment, such an object is separated in the row direction in order to obtain the object that corresponds to the wall W1 and the object that corresponds to the car C1. Note that the fourth embodiment as will be described later is different from the third embodiment as described above only in this respect. For this reason, only the differences between the third embodiment and the above embodiments will be described below, and overlapping descriptions are omitted where appropriate.

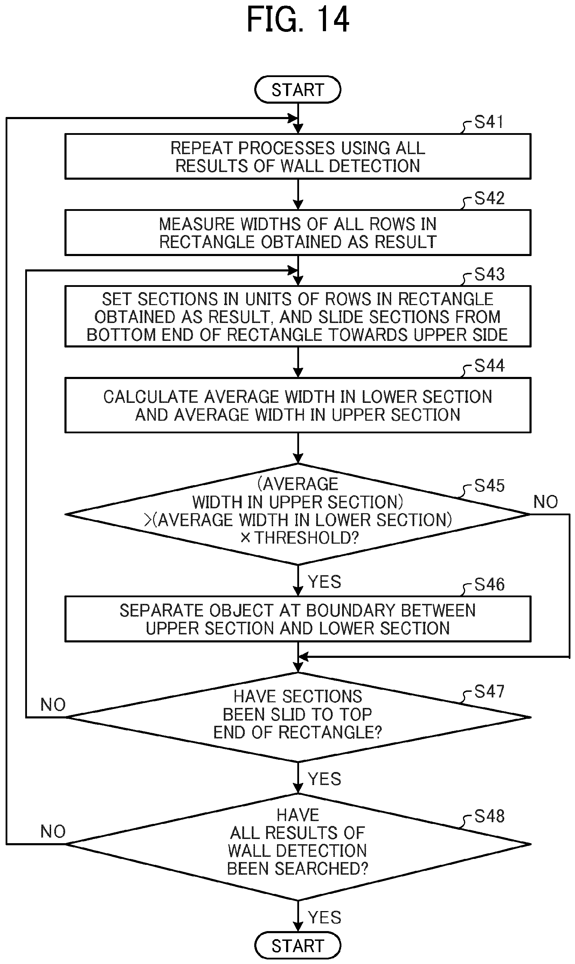

FIG. 14 is a flowchart of how the separator 46 according to the fourth embodiment as above separates objects in the row direction. The separator 46 starts the processes via a step S41, and repeats the processes in steps S42 to S48 for each object until it is determined in the step S48 that the separating processes in the row direction are completed for all the results of wall detection (objects).

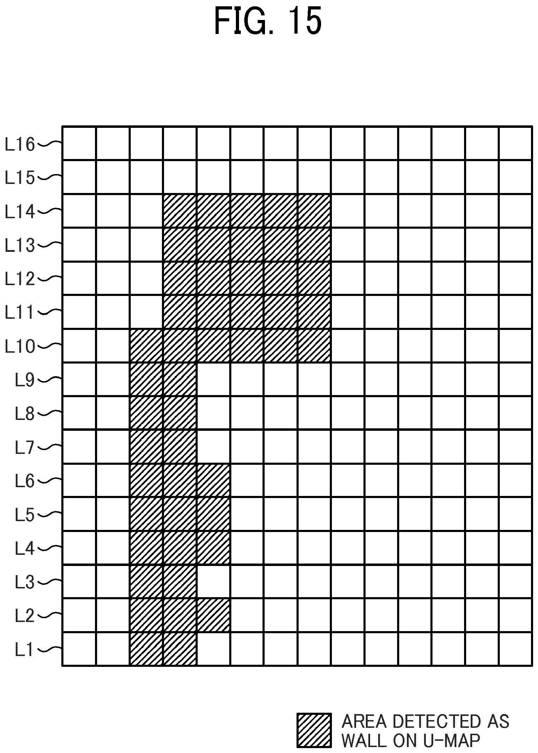

Firstly, in the step S42, the separator 46 detects the widths of all the rows in the results of wall detection (object). More specifically, in the case of the captured image as illustrated in FIG. 13A, a U-map is obtained on which an object as illustrated in FIG. 15 appears. The separator 46 detects each one of the widths in the first row L1 to the fourteenth row L14 of the object illustrated in FIG. 15.

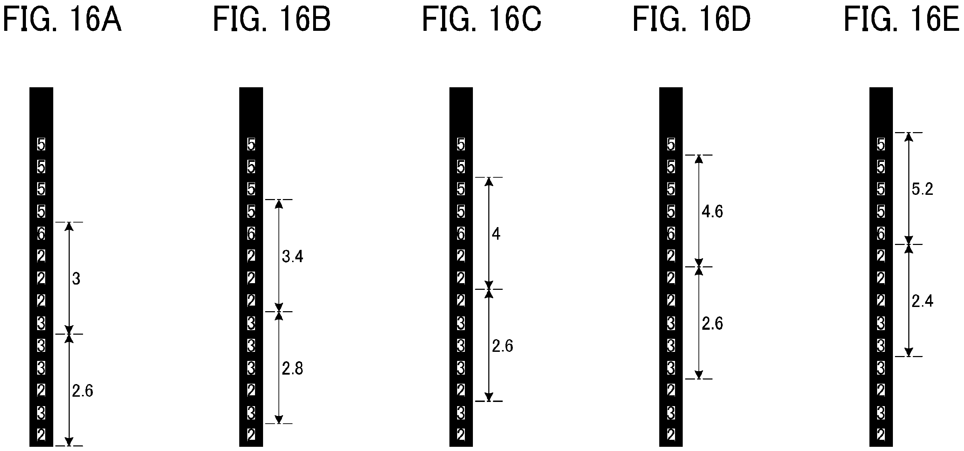

Next, in a step S43, the separator 46 sets sections in units of rows in a rectangle obtained as results of wall detection, and slides the sections from the bottom end of the rectangle towards the upper side. More specifically, as illustrated in FIG. 16A, the separator 46 generate a one-dimensional histogram where the values of width of the first row L1 to the fourteenth row L14 of the object are stacked from the bottom, and sets, for example, a first section including five values and a second section contiguous to the first section and including five values. In the example case of FIG. 16A, the first section consists of the first row L1 to the fifth row L5, and the second section that is contiguous to the first section consists of the sixth row L6 to the tenth row L10. As will be described later, the separator 46 calculates the average of the values of width in the first section and the second section, while sliding the first section and the second section upward on the histogram by one value of width of a row at a time.

In other words, in the step S44, the separator 46 calculates, as illustrated in FIG. 16A, the average of the values of width in the first section from the first row L1 to the fifth row L5 (the average on the underside) and the average of the values of width in the second section from the sixth row L6 to the tenth row L10 (the average on the topside). Then, in a step S45, the separator 46 determines whether or not "(Average in First Section × Threshold) > Average in Second Section." In the present embodiment, the threshold used herein is, for example, "2".

In the example case of FIG. 16A, the separator 46 calculates the average "2.6" of the values 2, 3, 2, 3, and 3 of each row in the width direction from the first row L1 to the fifth row L5 , and calculates the average "3.0" of the values 3, 2, 2, 2, and 6 of each row in the width direction from the sixth row L6 to the tenth row L10. Then, the separator 46 multiplies the average "2.6" in the first section by the threshold "2", and compares this multiplied value, i.e., the weighted average "5.2", with the average "3.0" in the second section.

In the case of the above comparison, the multiplied value "5.2" on the underside is greater than the average "3.0" in the second section on the topside ("NO" in the step S45). Accordingly, the separator 46 advances the process to a step S47, and determines whether or not the first section and the second section have been slid to the top end of the histogram. When it is determined that first section and the second section have been slid to the top end of the histogram ("YES" in the step S47), the separator 46 advances the process to a step S48, and determines whether the separating processes in the row direction, which will be described later in detail, are completed for all the results of wall detection (objects). When it is determined that the separating processes in the row direction, which will be described later in detail, are completed for all the results of wall detection (objects) ("YES" in the step S48), the separating processes in the row direction, as illustrated in the flowchart of FIG. 14, are terminated.

By contrast, when it is determined that the separating processes in the row direction, which will be described later in detail, are not yet completed for all the results of wall detection (objects) ("NO" in the step S48), the separator 46 returns the process to the step S42 via the step S41, and performs the separating processes in the row direction, which will be described later in detail, for the next result of wall detection (object).

In other words, as illustrated in FIG. 16A to FIG. 16E, the separator 46 slides the first section and the second section upward on the histogram by one value of width at a time. Then, the average in the first section that is weighted by the threshold and the non-weighted average in the second section are calculated and obtained, and these two averages are compared with each other. Due to the configuration as described above, in the example cases of FIG. 16A to FIG. 16E, the results of comparison among the following results of calculation are obtained according to the slid position of the first section and the second section.

"3.0<(2.6×2) (see FIG. 16A)" -> "3.4<(2.8×2) (see FIG. 16B)" -> "4.0<(2.6×2) (see FIG. 16C)" -> "4.6<(2.6×2) (see FIG. 16D)" -> "5.2>(2.4×2) (see FIG. 16E)"

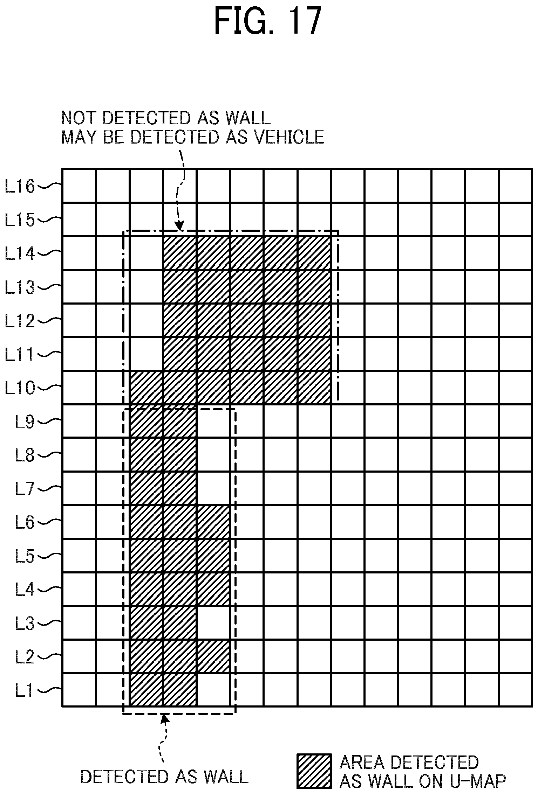

As illustrated in FIG. 16E, when the non-weighted average in the second section is greater than the average in the first section that is weighted by the threshold ("YES" in the step S45), as illustrated in FIG. 17, the separator 46 separates, in a step S46, the object at the boundary between the first section and the second section in the row direction. More specifically, in the example case illustrated in FIG. 16E, the first section is separated from the second section at the position of ninth value from the bottom on the histogram. In this example, the position of ninth value serves as the boundary between the first section and the second section. For this reason, the separator 46 separates the object at the ninth row L9 in the row direction, as illustrated in FIG. 17. As described above, separation is performed in the row direction using an index for separating an object such as a vehicle that makes the width greater with reference to the wall. Accordingly, the object that corresponds to the car C1 positioned on the far side (see the tenth row L10 to the fourteenth row L14) can be separated from the object that corresponds to the wall W1 (see the first row L1 to the ninth row L9).

In the equipment control system according to the fourth embodiment, a combined object can precisely be separated in the row direction. Accordingly, object recognition processes can precisely be performed based on the separated objects. Moreover, for example, the accuracy of control improves in the equipment control system, and advantageous effects similar to those of the embodiments as described above can be achieved.

<Fifth Embodiment>

Next, the equipment control system according to a fifth embodiment is described. In the fourth embodiment as described above, the width of all the rows are firstly calculated, and then the averages are calculated and the calculated averages are compared with each other. By contrast, in the fifth embodiment, for example, the average of each section is calculated and objects are separated at the timing when the sections can be set as above. Note that the fifth embodiment as will be described later is different from the fourth embodiment as described above only in this respect. For this reason, only the differences between the third embodiment and the above embodiments will be described below, and overlapping descriptions are omitted where appropriate.

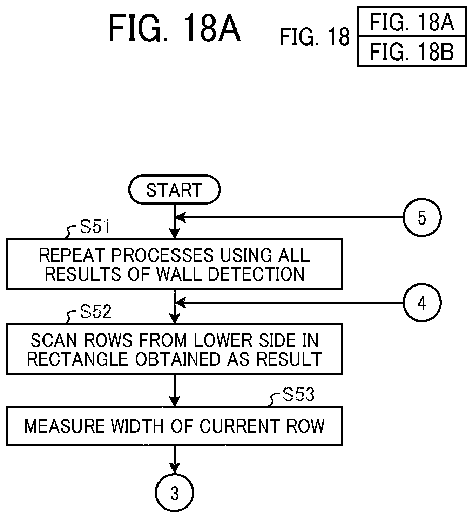

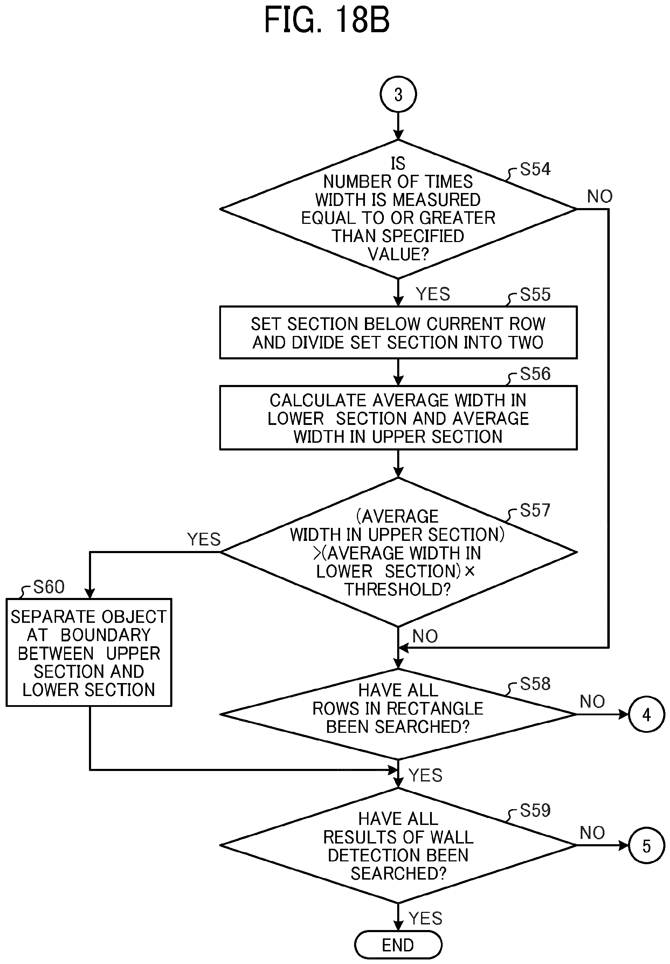

FIG. 18A and FIG. 18B are a flowchart of how the separator 46 according to the fifth embodiment as above separates objects in the row direction. The separator 46 starts the processes via a step S51, and in the step S59, repeats the processes in steps S52 to S59 for each object until it is determined that the separating processes in the row direction are completed for all the results of wall detection (objects).

Firstly, in the step S52, the separator 46 sequentially scans the results of wall detection (object), shifting from the bottom row to the top row, and in a step S53, calculates the width of the current row. In other words, width of row is sequentially calculated for every movement operation. In the step S54, the separator 46 determines whether the calculation of values of width has been done equal to or more than a predetermined number of times. In other words, in the step S54, the separator 46 determines whether or not, for example, the calculation of ten values of width, which enables the setting as above of the first section and the second section, has been done. Note that each of the first section and the second section in the present embodiment includes five values of width in a similar manner to the previous embodiment as above, and thus it is determined as to whether the calculation of ten values of width has been done. However, when each section includes three values of width, whether the calculation of six values of width has been done is determined. More specifically, in the step S54, the separator 46 determines whether the calculation of a certain number of values of width has been done and the first section and the second section can be set.

When the number of times the values of width are calculated is less than a predetermined value ("NO" in the step S54), the separator 46 advances the process to the step S58, and determines whether or not all the rows of the object, which is currently worked on, have been scanned. When it is determined that all the rows of the object, which is currently worked on, have been scanned ("YES" in the step S58), the separator 46 advances the process to a step S59, and determines whether the separating processes in the row direction are completed for all the objects. When it is determined that the separating processes in the row direction are completed for all the objects ("YES" in the step S59), the separator 46 terminates the processes in the flowchart of FIG. 18A and FIG. 18B. When it is determined that the separating processes in the row direction are not yet completed for all the objects ("NO" in the step S59), the separator 46 returns the process to the step S52 via the step S51, and performs the separating processes in the row direction, which will be described later in detail, for another object.

By contrast, when it is determined that all the rows of the object have not yet been scanned ("NO" in the step S58), the separator 46 returns the process to the step S52, and start scanning other rows of the object.

Next, when it is determined in the step S54 that the width has been measured a predetermined number of times or more ("YES" in the step S54), the separator 46 sets the first section and the second section as above from the current row to the lower rows on the above histogram (see FIG. 16A to FIG. 16E) (step S55), and calculates the average of each section in the step S56. Then, in a step S57, the separator 46 determines whether or not "Average in Second Section > (Average in First Section × 2)". When "Average in Second Section > (Average in First Section × 2)" ("YES" in the step S57), in a step S60, the separator 46 separates the object at the boundary between the first section and the second section (see FIG. 16E and FIG. 17).

By contrast, when "Average in Second Section > (Average in First Section × 2)" is not met ("NO" in the step S57), the separator 46 advances the process to the step S58, and as described above, determines whether or not all the rows of the object have been scanned. When it is determined that all the rows of the object have not yet been scanned, the separator 46 returns the process to the step S52. According to the fifth embodiment as described above, row searches, width measurement, and change detection can be performed in parallel from the lower side of the results of wall detection (object). Accordingly, the objects can speedily be separated from each other, and equipment can be controlled at high speed. Moreover, advantageous effects similar to those of the embodiments as described above can be achieved.

<Sixth Embodiment>

Next, the equipment control system according to a sixth embodiment is described. In the sixth embodiment, the separator 46 sequentially searches for a combined object on a U-map from the front side to the far side in the depth direction. Accordingly, a wall-like object that exists in the depth direction is detected, and the detected wall and other objects such as a vehicle are separated from each other. Note that the sixth embodiment as will be described later is different from the above embodiments as described above only in this respect. For this reason, only the differences between the third embodiment and the above embodiments will be described below, and overlapping descriptions are omitted where appropriate.

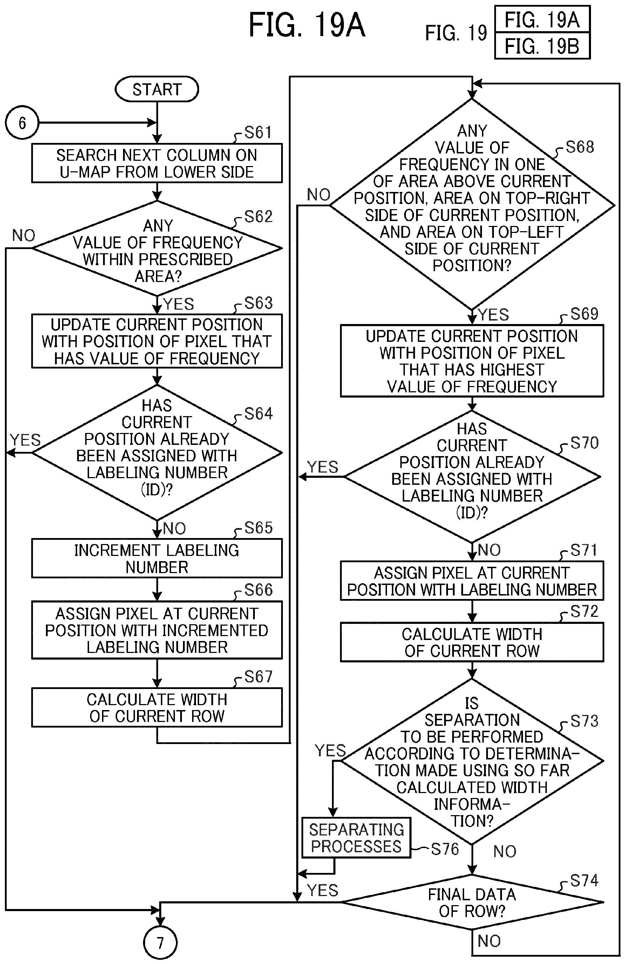

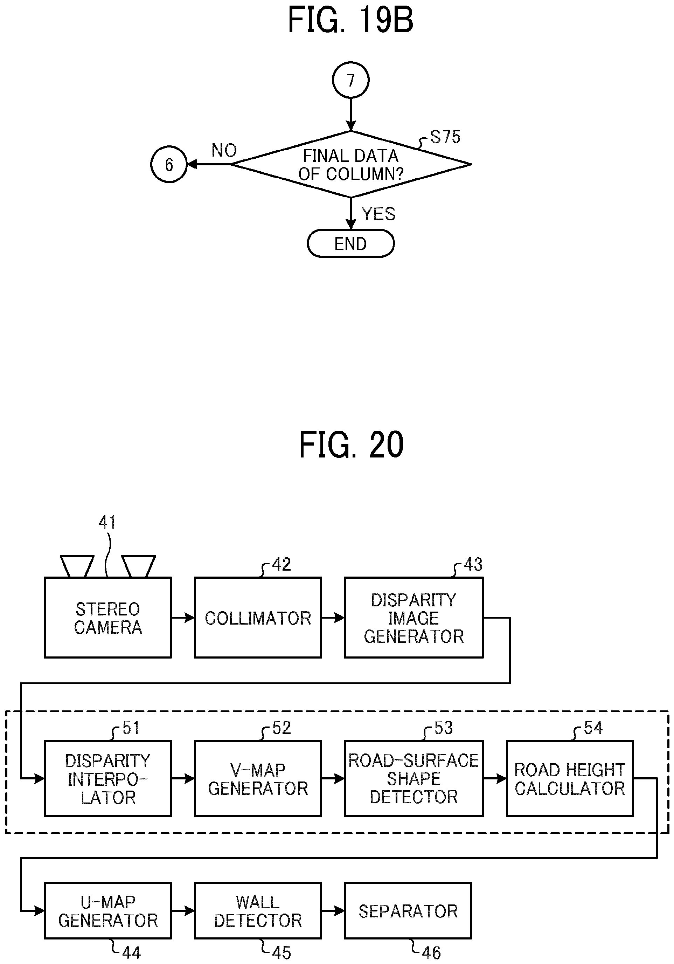

FIG. 19A and FIG. 19B are a flowchart of how the separator 46 according to the sixth embodiment as above separates objects in the row direction.

Firstly, the separator 46 searches the first column on the U-map from the lower side (from the area at the shortest distance) (step S61). Next, the separator 46 determines whether or not any of the three pixels in the row above the pixel that is currently being searched (i.e., the pixel A in the row above the pixel that is currently being searched, and the two pixels B and C adjacent to the pixel A in the same row on the right and left sides, respectively) has a value of frequency (step S62). When none of the above three pixels has a value of frequency ("NO" in the step S62), the separator 46 advances the process to a step S75, and determines whether or not the final data in the final column has been searched.

When it is determined that the final data in the final column has been searched ("YES" in the step S75), the separator 46 terminates the overall processes in the flowchart of FIG. 19A and FIG. 19B. By contrast, when it is determined that the final data in the final column has not yet been searched, the separator 46 returns the process to the step S61 in order to search the next column. In other words, when no frequency value is detected in any of the three pixels in the row above the pixel that is currently being searched, the separator 46 terminates the current search, i.e., the first search in which, for example, the labeling number (label) "1" is set, and shifts to the second search in which the labeling number "2" is set.

Next, when some of the above three pixels has a value of frequency ("YES" in the step S62), the separator 46 updates the current searching position with the position of the pixel that has a frequency value (step S63). Then, the separator 46 determines whether or not the pixel at the current searching position has already been assigned with a labeling number (step S64).

When it is determined that a labeling number has already been assigned, the separator 46 terminates the processes in the flowchart of FIG. 19A and FIG. 19B via the above step S75, or returns the process to the step S61 in order to search the next column.

By contrast, when it is determined that a labeling number has not yet been assigned ("NO" in the step S64), the separator 46 increments the labeling number by one (step S65), performs labeling processes to assign the pixel at the current searching position with the incremented labeling number (step S66).

Next, in a step S67, the separator 46 calculates the width of the current row (see FIG. 11A, FIG. 11B, and FIG. 11C).

Next, the separator 46 determines whether or not any of the pixel A in the row directly above the pixel at the current searching position (i.e., the pixel assigned with a labeling number) and the two pixels B and C adjacent to the pixel A [in the same row] on the right and left sides, respectively, has a frequency value (step S68). In other words, in the step S68, the separator 46 determines whether or not any of the above three pixels has a value of frequency.

When it is determined that none of the above three pixels has a value of frequency ("NO" in the step S68), the separator 46 terminates the processes in the flowchart of FIG. 19A and FIG. 19B via the above step S75, or returns the process to the step S61 in order to search the next column.

By contrast, when it is determined that some of the above three pixels has a value of frequency ("YES" in the step S68), the separator 46 updates the current searching position with the position of the pixel that has the highest value of frequency (step S69).

Next, the separator 46 determines whether or not the pixel at the updated current searching position has already been assigned with different identification (ID) (step S70). When it is determined that different ID has already been assigned ("YES" in the step S70), the separator 46 terminates the processes in the flowchart of FIG. 19A and FIG. 19B via the above step S75, or returns the process to the step S61 in order to search the next column.

By contrast, when it is determined that the pixel at the updated current searching position has not yet been assigned with different ID ("NO" in the step S70), the separator 46 assigns the pixel at the current searching position with a labeling number (step S71).

Next, in a step S72, the separator 46 calculates the width of the current row (see FIG. 11A, FIG. 11B, and FIG. 11C). In a step S73, the separator 46 determines whether or not to use the so far calculated width information to perform any of the separating processes according to the first to fifth embodiments as described above. When separating processes are to be performed ("YES" in the step S73), the separator 46 advances the process to a step S76, and perform the separating processes in the row direction according to one of the third to fifth embodiments as described above. Once one of the separating processes is performed, the separator 46 terminates the processes in the flowchart of FIG. 19A and FIG. 19B via the step S75, or returns the process to the step S61 in order to search the next column.

By contrast, when separating processes are not to be performed ("NO" in the step S73), the separator 46 advances the process to a step S74. In the step S74, the separator 46 determines whether or not the final data (pixel) in the currently searching row has been searched. When it is determined that the final pixel in the current row has not yet been searched ("NO" in the step S74), the separator 46 returns the process to the step S68 in order to search the next pixel in the current row. By contrast, when it is determined that the final pixel in the current row has been searched ("YES" in the step S74), the separator 46 terminates the processes in the flowchart of FIG. 19A and FIG. 19B via the above step S75, or returns the process to the step S61 in order to search the next column.

According to the sixth embodiment as described above, the detection of a wall and the separation between the wall and an object such as a vehicle can be performed in parallel, and equipment can be controlled at high speed. Moreover, advantageous effects similar to those of the embodiments as described above can be achieved.

<Seventh Embodiment>

Next, the equipment control system according to a seventh embodiment is described. In the embodiments as described above, the U-map generator 44 generates a U-map based on the disparity image generated by the disparity image generator. By contrast, in the equipment control system according to the seventh embodiment, a U-map that reflects the road height is generated, and the objects on the generated U-map are separated as in the embodiments described above. Due to such a configuration, objects can be separated from each other even more precisely. Note that the seventh embodiment as will be described later is different from the above embodiments as described above only in this respect. For this reason, only the differences between the third embodiment and the above embodiments will be described below, and overlapping descriptions are omitted where appropriate.

In the equipment control system according to the seventh embodiment, the CPU 304 executes a three-dimensional object recognition program to implement the collimator 42, the disparity image generator 43, the U-map generator 44, the wall detector 45, and the separator 46, as illustrated in FIG. 4, as well as to implement the multiple functions of a disparity interpolator 51, a V-map generator 52, a road-surface shape detector 53, and a road height calculator 54, as illustrated in FIG. 20.

In the present embodiment, the disparity interpolator 51, the V-map generator 52, the road-surface shape detector 53, and the road height calculator 54 are implemented by software. However, as described above, some of or all of the disparity interpolator 51, the V-map generator 52, the road-surface shape detector 53, and the road height calculator 54 may be implemented by hardware such as an integrated circuit (IC).

The disparity interpolator 51 interpolates a disparity image. The V-map generator 52 generates a V-map based on a plurality of pixel values where the votable area is restricted. The road-surface shape detector 53 and the road height calculator 54 calculates the road height in advance before a V-map that corresponds to the disparity image has been generated.

More specifically, for example, when a disparity image where a utility pole exists on the left side of a vehicle, which travels on a flat road that runs in the center of the screen, is obtained, the V-map generator 52 assigns the frequency that is increased by one to the pixels with the disparity value D and the Y-coordinate value, among the pixels of the captured image. Then, the V-map generator 52 votes on the pixels in a two-dimensional histogram where the X-axis, the Y-axis, and the Z-axis indicate a disparity value D, the Y-coordinate value, and the frequency, respectively. Due to this configuration, a V-map is generated where voting for a vehicle and a utility pole is done on the road that is voted as a downward straight line to the right. As the linear group of pixels on such a V-map can be specified, the group of pixels that correspond to the road surface can be specified. Note also that on such a V-map, no disparity value is detected from the portions under the road surface.

Next, the road-surface shape detector 53 detects the road surface that serves as a reference object whose height is used as a reference height for each object. The road-surface shape detector 53 approximate in a straight line the position that is estimated to be the road surface in the V-map. When the road surface is relatively flat, the road surface can be approximated in a single straight line. When the grade of the road changes at some midpoint, the V-map is divided into several sections to approximate the road in a straight line. By so doing, even in the cases where the grade of the road changes at some midpoint, approximation in a straight line can precisely be performed.

Next, the road height calculator 54 calculates the road height and stores (tabulates) the calculated road height in a storage unit such as the RAM 310. As one or more straight lines representative of the road surface is obtained from the V-map, when the disparity d is determined, the corresponding Y-coordinate y0 is also determined. This coordinate y0 indicates the road height. The road height calculator 54 generates a road height list where the coordinate y0 that indicates the road height is associated with the disparities in a relevant range. For example, when the disparity value is d and the Y-coordinate is y', "y'-y0" indicates the height from the road surface when the disparity value is d. The road height calculator 54 the height H from the road surface with the coordinates (d, y') is calculated using the following computing expression.

$$"H=(z \times (y'-y0)/f"$$

Note that "z" in the above computing expression denotes the distance ($z=BF/(d\text{-offset})$) that is calculated from the disparity d, and "f" in the above computing expression denotes a value indicating the focal length of the stereo camera 2 where the measurement unit is converted into the same measurement unit as that of (y'-y0). In the above equation, "BF" denotes a value obtained by multiplying the base-line length B of the stereo camera 2 by the focal length f, and "offset" denotes a disparity when an object at infinity is captured.

As described above, the U-map generator 44 generates a U-map that is a two-dimensional histogram, where the horizontal axis, the vertical axis, and the Z-axis indicate the disparity image x, the disparity d on the disparity image, and the frequency, respectively. In so doing, voting is done for a point (x, y, d) on the disparity image where the height from the road surface is within a predetermined range (for example, 20 centimeters (cm) to 3 meters (m)), based on the value of (x, d). The U-map generator 44 generates a U-map upon voting for the pixels of the disparity image in a prescribed range with reference to a point (x, y, d) on a certain disparity image. More specifically, only the sky is captured in the upper 1/6 portion of the disparity image, and no object that requires recognition is taken in most cases. For this reason, the U-map generator 44 generates a U-map of frequency upon voting for the pixels of, for example, the 5/6 portion of the disparity image on the ground side (i.e., the area excluding the upper 1/6 portion of the disparity image).

The above separating processes are performed using such a U-map that reflects, for example, the height from the road surface. Due to this configuration, separating processes can further precisely be performed, and advantageous effects similar to those of the embodiments as described above can be achieved.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims. For example, a distance value and a disparity value can be handled in an equivalent manner. Accordingly, in the embodiments of the present disclosure as described above, a disparity image is used as an example of a distance image. However, no limitation is intended thereby. For example, a disparity image that is generated using a stereo camera may be integrated with distance data that is generated using a detector such as a millimeter-wave radar and a light detection and ranging (LiDAR) device to generate a distance image. Moreover, a stereo camera and a detector such as a millimeter-wave radar and a LiDAR device may be used in combination, and the results of the object detection using a stereo camera as described above may be combined with distance data to further improve the detection accuracy.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

The hardware platform includes any desired kind of hardware resources including, for example, a CPU, a RAM, and a hard disk drive (HDD). The CPU may be implemented by any desired kind of any desired number of processor. The RAM may be implemented by any desired kind of volatile or non-volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. An information processing device (30) comprising:

   a generator (44) configured to generate two-dimensional distribution data indicating a position of an object in a horizontal direction and a position of the object in a depth direction, based on data in which the position of the object in a vertical direction, the position of the object in the horizontal direction, and the position of the object in the depth direction are associated with each other; and
   a separator (46) configured to detect length of a plurality of columns of the object in the depth direction, and separate the object in the depth direction at at least one of the plurality of columns whose length is equal to or greater than a prescribed threshold.

2. The information processing device (30) according to claim 1, wherein the separator (46) separates the object in the depth direction at one of the plurality of columns with a maximum length.

3. The information processing device (30) according to claim 1, wherein the separator (46) recognizes, as one lump of object, a longest one of the plurality of columns whose length is equal to or greater than the prescribed threshold and one of the plurality of columns adjacent to the longest one of the plurality of columns among the plurality of columns whose length is equal to or greater than the prescribed threshold, and separates the object in the depth direction at the recognized lump of object.

4. The information processing device (30) according to any one of claims 1 to 3, wherein the separator (46) detects width of a plurality of rows of the object in a row direction two-dimensionally orthogonal to the depth direction, and separates the object in the row direction at one of the plurality of rows where a difference in width is equal to or greater than a prescribed threshold.

5. The information processing device (30) according to any one of claims 1 to 3, wherein the separator (46) detects width of a plurality of rows of the object in a row direction two-dimensionally orthogonal to the depth direction, and sets a first section and a second section each having one or a plurality of values of width, the first section and the second section being contiguous to each other in a column direction, the second section being on a far side,
while shifting the first section and the second section in the column direction by one value of width or by a plurality of values of width, the separator (46) calculates a second average of the one or a plurality of values of width in the second section and a first average of the one or a plurality of values of width in the first section weighted by a prescribed value, and when the second average in the second section takes a value greater than the first average in the first section weighted by the prescribed value, the separator (46) separates the object in the row direction at a boundary between the shifted first section and the shifted second section.

6. The information processing device (30) according to claim 5, wherein
when at least a predetermined number of values are obtained from the width of the plurality of rows of the object to set the first section and the second section, the separator (46) sets the first section and the second section, and calculates the first average of the first section and the second average of the second section and separates the object.

7. The information processing device (30) according to any one of claims 4 to 6, wherein
the separator (46) searches the object a plurality of times to detect with every search a unit of data having a value equal to or greater than a predetermined threshold, and performs labeling processes to assign a label indicating a number of searches,
the separator (46) selects a unit of data having a value equal to or greater than the predetermined threshold, from other two or more units of data in proximity to the unit of data in a direction of search, when no label is assigned to the selected unit of data, the separator (46) performs labeling processes to assign a label indicating the number of searches, and detects a value of the object in the row direction, and
when at least a predetermined number of values of width to separate the object in the row direction are detected, the separator (46) separates the object in the row direction.

8. The information processing device (30) according to any one of claims 1 to 7, wherein the generator (44) generates the two-dimensional distribution data that reflects road height.

9. An imaging device (4) comprising:

an imager (2) configured to generate imaging data to be used to generate two-dimensional distribution data indicating a position of an object in a horizontal direction and a position of the object in a depth direction; and

the information processing device (30) according to any one of claims 1 to 8.

10. An equipment control system (3, 4) comprising:

the imaging device (4) according to claim 9; and
a controller (3) configured to control an apparatus (1) based on the two-dimensional distribution data of the object separated by the information processing device (30) of the imaging device (4).

11. A mobile object (1) comprising the controller (3) of the equipment control system (3, 4) according to claim 10, wherein the mobile object (1) is controlled by the controller (3).

12. A method of processing information, the method comprising:

generating two-dimensional distribution data indicating a position of an object in a horizontal direction and a position of the object in a depth direction, based on data in which the position of the object in a vertical direction, the position of the object in the horizontal direction, and the position of the object in the depth direction are associated with each other;
detecting length of a plurality of columns of the object in the depth direction; and
separating the object in the depth direction at at least one of the plurality of columns whose length is equal to or greater than a prescribed threshold.

13. A carrier means carrying computer readable code for controlling a computer to carry out the method of claim 12.

# FIG. 1

LEFT FIELD OF VISION

RIGHT FIELD OF VISION

1

2

DIRECTION OF
TRAVEL OF VEHICLE

# FIG. 2

STEREO
CAMERA
2

VEHICLE
ECU
3

# FIG. 3

RECOGNITION DATA          CAN DATA

# FIG. 4

# FIG. 5A

# FIG. 5B

# FIG. 6

START

S1
REPEAT PROCESSES USING ALL
RESULTS OF WALL DETECTION

S2
MEASURE HEIGHT (LENGTH IN DEPTH DIRECTION)
OF EACH COLUMN OF RESULT IMAGE

S3
MEASURED HEIGHT
(LENGTH IN DEPTH DIRECTION)
> MAXIMUM VALUE
SO FAR? — NO

YES

S4
UPDATE MAXIMUM HEIGHT
(LENGTH IN DEPTH DIRECTION) AND POSITION
OF COLUMN WHERE HEIGHT BECOME MAXIMUM

S5
NO — HAVE ALL COLUMNS
BEEN SEARCHED?

YES

S6
STORE POSITION WHERE MAXIMUM HEIGHT
(i.e., LENGTH IN DEPTH DIRECTION) IS RECORDED

S7
NO — HAVE
ALL RESULTS OF WALL
DETECTION BEEN
SEARCHED?

YES

END

# FIG. 7A    FIG. 7B    FIG. 7C

SHAPE REGARDED AS VEHICLE
AFTER SEPARATION APPEARS
SIGNIFICANTLY DIFFERENT
FROM SHAPE OF VEHICLE

↓ LENGTH OF
↑ EACH COLUMN

▨ COLUMN IDENTIFIED AS
HAVING LENGTH EQUAL
TO OR GREATER
THAN THRESHOLD

▢ COLUMN IDENTIFIED
AS HAVING LENGTH
LESS THAN THRESHOLD

▨ COLUMN TO BE
STORED AS
WALL AFTER
SEPARATION

RESULTS OF
WALL
DETECTION

MAXIMUM
POSITION

MAXIMUM
POSITION

EP 3 330 893 A1

# FIG. 8

START

S1 — REPEAT PROCESSES USING ALL RESULTS OF WALL DETECTION

S2 — MEASURE HEIGHT OF EACH COLUMN OF RESULT IMAGE

S11 — MEASURED HEIGHT (LENGTH IN DEPTH DIRECTION) > THRESHOLD? — NO

YES

S12 — STORE POSITION WHERE HEIGHT EXCEEDS THRESHOLD

S3 — MEASURED HEIGHT (LENGTH IN DEPTH DIRECTION) > MAXIMUM VALUE SO FAR? — NO

YES

S4 — UPDATE MAXIMUM HEIGHT (LENGTH IN DEPTH DIRECTION) AND POSITION OF COLUMN WHERE HEIGHT BECOME MAXIMUM

S5 — HAVE ALL COLUMNS BEEN SEARCHED? — NO

YES

S13 — STORE POSITION WHERE MAXIMUM HEIGHT (LENGTH IN DEPTH DIRECTION) IS RECORDED AND NEIGHBORING POSITION WHERE HEIGHT EXCEEDING THRESHOLD IS RECORDED AS WALL

S7 — HAVE ALL RESULTS OF WALL DETECTION BEEN SEARCHED? — NO

YES

END

FIG. 9A

LENGTH OF EACH COLUMN

RESULTS OF WAL DETECTION

FIG. 9B

COLUMN IDENTIFIED AS HAVING LENGTH EQUAL TO OR GREATER THAN THRESHOLD

COLUMN IDENTIFIED AS HAVING LENGTH LESS THAN THRESHOLD

MAXIMUM POSITION

FIG. 9C

CL6
CL5 CL8
CL1 CL2
CL7
CL3
CL4

COLUMN TO BE STORED AS WALL AFTER SEPARATION

COLUMN NEIGHBORING MAXIMUM POSITION AND SATISFYING THRESHOLD

MAXIMUM POSITION

# FIG. 10A

# FIG. 10B

# FIG. 11A

C3

C2

C1

# FIG. 11B

C3

C2

C1

# FIG. 11C

C3

C2

C1

# FIG. 11D

C3

C2

C1

# FIG. 12A

FIG. 12

| FIG. 12A |
|----------|
| FIG. 12B |

START

①——→ S21

REPEAT PROCESSES USING ALL RESULTS OF WALL DETECTION

S22

MEASURE WIDTH OF EACH COLUMN OF RESULT IMAGEFROM FRONT SIDE

S23

IS WIDTH EQUAL TO OR GREATER THAN FIRST THRESHOLD? — NO

YES — S24

COUNT NUMBER OF TIMES WIDTH BECOMES EQUAL TO OR GREATER HAN FIRST THRESHOLD

S25

IS NUMBER OF TIMES WIDTH BECOMES EQUAL TO OR GREATER THAN FIRST THRESHOLD EQUAL TO OR GREATER THAN PREDETERMINED VALUE? — NO

YES — S26

SET FLAG

S27

IS FLAG SET? — NO

YES

S28

IS WIDTH LESS THAN SECOND THRESHOLD? — NO

YES — S29

COUNT NUMBER OF TIMES WIDTH BECOMES LESS THAN SECOND THRESHOLD

S30

IS NUMBER OF TIMES WIDTH BECOMES LESS THAN SECOND THRESHOLD EQUAL TO OR GREATER THAN PREDETERMINED VALUE? — NO

YES — S31

MODIFY RESULTS OF DETECTION WITH REFERENCE TO CURRENT ROW

S32

HAS ROW BEEN SEARCHED TILL ENDPOINT OF SEARCH? — NO

YES

②

25

# FIG. 12B

# FIG. 13A

# FIG. 13B

# FIG. 14

START

S41
REPEAT PROCESSES USING ALL
RESULTS OF WALL DETECTION

S42
MEASURE WIDTHS OF ALL ROWS IN
RECTANGLE OBTAINED AS RESULT

S43
SET SECTIONS IN UNITS OF ROWS IN RECTANGLE
OBTAINED AS RESULT, AND SLIDE SECTIONS FROM
BOTTOM END OF RECTANGLE TOWARDS UPPER SIDE

S44
CALCULATE AVERAGE WIDTH IN LOWER SECTION
AND AVERAGE WIDTH IN UPPER SECTION

S45
(AVERAGE
WIDTH IN UPPER SECTION)
>(AVERAGE WIDTH IN LOWER SECTION)
× THRESHOLD?

NO

YES

S46
SEPARATE OBJECT AT BOUNDARY BETWEEN
UPPER SECTION AND LOWER SECTION

S47
HAVE SECTIONS
BEEN SLID TO TOP
END OF RECTANGLE?

NO

YES

S48
HAVE
ALL RESULTS OF
WALL DETECTION
BEEN SEARCHED?

NO

YES

START

# FIG. 15

AREA DETECTED AS
WALL ON U-MAP

# FIG. 16A

# FIG. 16B

# FIG. 16C

# FIG. 16D

# FIG. 16E

# FIG. 17

NOT DETECTED AS WALL
MAY BE DETECTED AS VEHICLE

DETECTED AS WALL

AREA DETECTED
AS WALL ON U-MAP

# FIG. 18A

FIG. 18

| FIG. 18A |
| FIG. 18B |

START

5

S51

REPEAT PROCESSES USING ALL
RESULTS OF WALL DETECTION

4

S52

SCAN ROWS FROM LOWER SIDE IN
RECTANGLE OBTAINED AS RESULT

S53

MEASURE WIDTH OF CURRENT ROW

3

# FIG. 18B

③

IS NUMBER OF TIMES WIDTH IS MEASURED EQUAL TO OR GREATER THAN SPECIFIED VALUE? — S54 — NO

YES ⌐S55

SET SECTION BELOW CURRENT ROW AND DIVIDE SET SECTION INTO TWO

⌐S56

CALCULATE AVERAGE WIDTH IN LOWER SECTION AND AVERAGE WIDTH IN UPPER SECTION

YES (AVERAGE WIDTH IN UPPER SECTION) >(AVERAGE WIDTH IN LOWER SECTION) × THRESHOLD? — S57

NO

⌐S60

SEPARATE OBJECT AT BOUNDARY BETWEEN UPPER SECTION AND LOWER SECTION

HAVE ALL ROWS IN RECTANGLE BEEN SEARCHED? — S58 — NO ④

YES

HAVE ALL RESULTS OF WALL DETECTION BEEN SEARCHED? — S59 — NO ⑤

YES

END

# FIG. 19A

FIG. 19 | FIG. 19A |
| FIG. 19B |

START

(6)

**S61** SEARCH NEXT COLUMN ON U-MAP FROM LOWER SIDE

**S62** ANY VALUE OF FREQUENCY WITHIN PRESCRIBED AREA? — NO

YES

**S63** UPDATE CURRENT POSITION WITH POSITION OF PIXEL THAT HAS VALUE OF FREQUENCY

**S64** HAS CURRENT POSITION ALREADY BEEN ASSIGNED WITH LABELING NUMBER (ID)? — YES

NO

**S65** INCREMENT LABELING NUMBER

**S66** ASSIGN PIXEL AT CURRENT POSITION WITH INCREMENTED LABELING NUMBER

**S67** CALCULATE WIDTH OF CURRENT ROW

**S68** ANY VALUE OF FREQUENCY IN ONE OF AREA ABOVE CURRENT POSITION, AREA ON TOP-RIGHT SIDE OF CURRENT POSITION, AND AREA ON TOP-LEFT SIDE OF CURRENT POSITION? — NO

YES

**S69** UPDATE CURRENT POSITION WITH POSITION OF PIXEL THAT HAS HIGHEST VALUE OF FREQUENCY

**S70** HAS CURRENT POSITION ALREADY BEEN ASSIGNED WITH LABELING NUMBER (ID)? — YES

NO

**S71** ASSIGN PIXEL AT CURRENT POSITION WITH LABELING NUMBER

**S72** CALCULATE WIDTH OF CURRENT ROW

**S73** IS SEPARATION TO BE PERFORMED ACCORDING TO DETERMINATION MADE USING SO FAR CALCULATED WIDTH INFORMATION? — YES

**S76** SEPARATING PROCESSES

NO

YES

**S74** FINAL DATA OF ROW?

NO

(7)

# FIG. 19B

⑦

S75
**FINAL DATA OF COLUMN?**

⑥ ← NO

YES

END

# FIG. 20

41

STEREO CAMERA → COLLIMATOR (42) → DISPARITY IMAGE GENERATOR (43)

DISPARITY INTERPO-LATOR (51) → V-MAP GENERATOR (52) → ROAD-SURFACE SHAPE DETECTOR (53) → ROAD HEIGHT CALCULATOR (54)

U-MAP GENERATOR (44) → WALL DETECTOR (45) → SEPARATOR (46)

Europäisches
Patentamt

European
Patent Office

Office européen
des brevets

# EUROPEAN SEARCH REPORT

Application Number

EP 17 20 4258

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ILOIE ALEXANDRU ET AL: "UV disparity based obstacle detection and pedestrian classification in urban traffic scenarios", 2014 IEEE 10TH INTERNATIONAL CONFERENCE ON INTELLIGENT COMPUTER COMMUNICATION AND PROCESSING (ICCP), IEEE, 4 September 2014 (2014-09-04), pages 119-125, XP032671049, DOI: 10.1109/ICCP.2014.6936963 ISBN: 978-1-4799-6568-7 [retrieved on 2014-10-27] * Section I; Section III and Section IV-B.; figures 2, 3, 5, 6, 7, 8, 9, 10 * | 1-13 | INV. G06K9/00 G06K9/46 |
| X | BADINO HERNÁN ET AL: "The Stixel World - A Compact Medium Level Representation of the 3D-World", 9 September 2009 (2009-09-09), ECCV 2016 CONFERENCE; [LECTURE NOTES IN COMPUTER SCIENCE; LECT.NOTES COMPUTER], SPRINGER INTERNATIONAL PUBLISHING, CHAM, PAGE(S) 51 - 60, XP047380367, ISSN: 0302-9743 ISBN: 978-3-642-33485-6 * Section 1; Section 2.2; Section 2.4; Section 2.5; Section 3; figures 1, 2, 3, 4, 5 * | 1-13 | |

TECHNICAL FIELDS
SEARCHED    (IPC)

G06K

The present search report has been drawn up for all claims

| Place of search | Date of completion of the search | Examiner |
|---|---|---|
| The Hague | 26 March 2018 | Craciun, Paula |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06226828 A